# EUROPÄISCHE PATENTANMELDUNG

(11) **EP 2 875 944 A1**
(43) Veröffentlichungstag der Anmeldung: **27.05.2015**
(21) Anmeldenummer: 13194289.8
(22) Anmeldetag: 25.11.2013
(51) Int. Cl.: B32B 5/02, B32B 5/22, B32B 5/26, B32B 5/28, B32B 17/02, B32B 17/04, B32B 17/06, B32B 25/10, B32B 27/04, B32B 27/12, B32B 27/28, B32B 27/34, B32B 27/36, B32B 27/40, B29C 70/16, B29C 70/24, B29C 70/46, B29C 70/08

(54) **Genarbte Faserverbundwerkstoffe**

(71) Anmelder: Bond Laminates GmbH, 59929 Brilon (DE)
(72) Erfinder: Bonefeld, dirk, 33181 Bad Wünnenberg (DE); Deitmerg, Philipp, 57392 Scmallenberg (DE); Hoffmann, Michael, 59929 Brilon (DE)
(74) Vertreter: Wichmann, Birgid

(57) **Zusammenfassung**

Die vorliegende Erfindung betrifft Erzeugnisse aus leichten Hochleistungs-Faserverbund-werkstoffen mit genarbter Oberfläche bzw. einer lederähnlichen Narbung.

## Beschreibung

Die vorliegende Erfindung betrifft Erzeugnisse aus leichten Hochleistungs-Faserverbundwerkstoffen mit genarbter Oberfläche bzw. mit einer lederähnlichen Narbung, im Folgenden auch als Textur bezeichnet.

Erzeugnisse, insbesondere Ingenieurbauteile, wie beispielsweise Cockpits bzw. Armaturenbretter von Kraftfahrzeugen sind unterschiedlich ausgebildet. Derzeit werden derartige Ingenieurbauteile hauptsächlich aus Kunststoffspritzguss erzeugt. Die Oberflächen, die dem Innenraum der Kraftfahrzeuge zugewandt sind, werden bei Kraftfahrzeugen der unteren Klassen oft spritzblank belassen oder allenfalls lackiert. In den höherwertigen Klassen von Kraftfahrzeugen werden die Oberflächen in der Regel stärker aufgewertet. Derartige Ingenieurbauteile werden mit Folien, insbesondere Kompakt- oder Schaumfolien, überzogen oder Träger und Folie werden gemeinsam hinterschäumt. In dem Luxussegment von Kraftfahrzeugen bestehen die Oberflächen der Interieurbauteile häufig aus Nähkleidern aus Kunststoff oder Echtleder. Bis auf Echtleder sind die meisten gängigen Oberflächenmaterialien hauptsächlich aus petrochemischen Produkten, wie Polyurethan, thermoplastischen Elastomeren und Polyolefinen oder Polyvinylchlorid aufgebaut.

Insbesondere bei den unterklassigen Kraftfahrzeugen sind die Interieurbauteile eher hart und ohne zusätzliches Dekor ausgebildet. Interieurbauteile und Oberflächen von Interieurbauteilen, die vollständig oder hauptsächlich aus petrochemischen Produkten bestehen, werden aufgrund des steigenden Umweltbewusstseins der Kunden von diesen häufig kritisch gesehen. Interieurbauteile, die mit Nähkleidern aus Kunststoff oder Echtleder versehen sind, sind zwar relativ hochwertig, aber teuer in der Herstellung und weisen ein höheres Gewicht auf. Zudem ist deren Recycling unpraktisch, da keine sortenreinen Abfälle anfallen.

In jüngster Zeit werden faserverstärkte Kunststoffformteile aufgrund ihres Gewichts und ihrer herausragenden mechanischen Eigenschaft bevorzugt bei Leichtbauanwendungen in der Luft- und Raumfahrt, aber auch im Automobilsektor, eingesetzt.

Die Festigkeit und Steifigkeit dieser Kunststoffformteile wird maßgeblich von den üblicherweise aus Glas, Kohlenstoff oder Aramid bestehenden Fasern bestimmt, die in einer formstabilen Kunststoffmatrix eingebettet sind. Die Kunststoffmatrix überträgt die Kräfte zwischen den Fasern, definiert deren Lage, stützt diese gegen ein Abknicken und schützt sie vor äußeren physikalischen bzw. chemischen Angriffen. Die Kunststoffmatrix kann aus einem Duroplasten oder auch aus einem Thermoplasten gebildet sein, wobei Thermoplaste, wie z.B. Polyprophylen (PP) oder Polyamid (PA), im Hinblick auf deren Umformbarkeit, Schweißbarkeit und Lagerfähigkeit Vorteile bieten. Eine Kunststoffmatrix aus einem Thermoplasten bietet zudem Vorteile hinsichtlich einer Recyclingfähigkeit der Kunststoffformteile. Des Weiteren können mit Hilfe der kurzen Zykluszeiten in der Herstellung die Kosten daraus herzustellender Bauteile reduziert, und eine Großserientauglichkeit gewährleistet werden.

In der Praxis werden bei der Fertigung, insbesondere von lasttragenden Kunststoffformteilen sogenannte Hochleistungsfaserverbunde eingesetzt, bei denen die Fasern z.T. als Endlosfasern vorliegen, d.h. bei denen die Fasern eine Faserlänge aufweisen, die der tatsächlichen Größe des zu fertigenden Kunststoffformteils oder mindestens der Länge zwischen den Krafteinleitungspunkten entspricht. Diese Kunststoffformteile werden üblicherweise aus sogenannten Faserhalbzeugen gefertigt, bei denen die Endlosfasern in ein- oder mehrlagigen Geweben oder Gelegen vorliegen. Die Endlosfasern können bereits mit einem zur Bildung der Kunststoffmatrix vorgesehenen Thermoplastpulver imprägniert oder auch mit dazu vorgesehenen Thermoplastfasern gemischt sein. Alternativ kommen auch zumeist plattenförmige Faserhalbzeuge zur Anwendung, bei denen die Endlosfasern bereits in einer Thermoplastmatrix eingebettet sind. Solche Faserhalbzeuge, auch als Organobleche bezeichnet, sind am Markt in verschiedenen vorkonfektionierten Varianten zu erwerben, beispielsweise unter dem Markennamen TEPEX® von der Firma Bond-Laminates GmbH, Brilon, Deutschland.

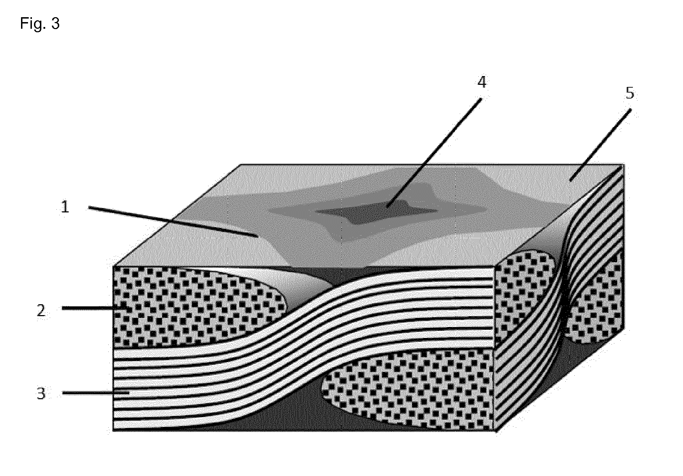

Handelt es sich bei den Geweben oder Gelegen um Gewebestrukturen, so weisen die daraus hergestellten thermoplastischen Halbzeuge aufgrund dieser Gewebestruktur Unebenheiten auf, die beim Verweben von Kettfaden und Schussfaden der für die Gewebestruktur zu verwendenden Fasern entstehen (siehe Fig. 3). Im Organoblech unterscheidet man daher faserreiche Regionen und matrixreiche Regionen. Letztere entstehen durch das Einfließen von Matrixkunststoff in die durch das Verweben der einzelnen Faserstränge entstehenden Täler. Insbesondere nach dem Umformungsprozess können diese Unebenheiten besonders hervortreten und unerwünschte gestalterische und haptische Erscheinungen bewirken.

Solche visuell bzw. haptisch erfassbaren Welligkeiten entsprechen jedoch bei vielen Anwendungen nicht den Vorgaben an das optische Erscheinungsbild vom Kunststoffformteilen. Aus diesem Grund werden Kunststoffformteile z.T. in einem zusätzlichen Fertigungsschritt aufwändig mit einer Oberflächenbeschichtung versehen, durch die die Oberflächenwelligkeit ausgeglichen, d.h. in einer Weise überdeckt (kaschiert) wird, so dass sich diese an der Oberfläche des Kunststoffformteils nicht mehr abbildet.

Diesbezüglich ist aus der DE 197 55 111 A1 ein Fertigungsverfahren bekannt, bei dem ein Faserhalbzeug in einer Werkzeugform einer Umformeinrichtung zunächst in die Form des späteren Kunststoffformteils gebracht wird. In einem weiteren Fertigungsschritt wird auf das noch in der Werkzeugform der Umformeinrichtung befindliche Faserhalbzeug nach einem als "in-mold coating" bezeichneten Verfahren eine flüssige Kunststofflackschicht aufgebracht, die durch ein Schließen der Werkzeugform auf dem umgeformten Faserhalbzeug verteilt und nachfolgend in der Werkzeugform thermisch unter Ablauf einer Polymerisationsreaktion ausgehärtet wird.

Auch wenn das Kunststoffformteil im Wege dieses Verfahrens mit einer Kunststoffbeschichtung versehen werden kann, an deren Oberfläche sich keinerlei Gewebestruktur der darunterliegenden Fasereinlage abbildet, ist das Verfahren insgesamt technisch aufwändig, zeitraubend und damit kostenintensiv.

Aus der DE 10 2010 040 301 A1 ist deshalb ein Verfahren zum Erzeugen eines faserverstärkten dreidimensionalen Kunststoffformteils bekannt, bei dem ein Faserhalbzeug aus Endlosfasern, die mit Thermoplastfasern gemischt, mit einem Thermoplasten vorimprägniert oder in einer Thermoplastmatrix eingebettet sind, bei einer vorbestimmten Umformtemperatur druckumgeformt und auf wenigstens einer Seite mit einer Kunststoffbeschichtung versehen wird, dadurch gekennzeichnet, dass das Faserhalbzeug und eine zur Bildung der Kunststoffbeschichtung vorgesehene Thermoplastfolie oder Thermoplastplatte aufeinandergelegt und in einem einzigen Fertigungsschritt gemeinsam druckumgeformt und dabei miteinander materialschlüssig verbunden werden.

Nachteilig an diesem Verfahren ist, dass die Thermoplastfolie während der Fertigung des faserverstärkten dreidimensionalen Kunststoffformteils aufgebracht werden muss.

Das Herstellen von mit Endlosfasern verstärkten Formkörpern aus thermoplastischen Kunststoffen wird grundsätzlich über einen zweistufigen Weg beschritten, wobei im ersten Schritt ein Halbzeug aus einem Endlosfasertextil, das mit einer Thermoplastschmelze zusammengeführt wird, ein luftblasenfreies Halbzeug erzeugt wird und im zweiten Schritt aus diesem Halbzeug durch Aufheizen und Pressformen und Abkühlen ein Formkörper, d.h. Fertigteil hergestellt wird. Derartige Verfahren zum Herstellen von Halbzeugen aus glasfasermattenverstärkten thermoplastischen Kunststoffen werden beispielsweise in der DE-OS 23 12 816, DE 29 48 235 A1, DE-OS 32 36 447 oder EP 1 923 420 A1 beschrieben.

Die Aufgabe der vorliegenden Erfindung besteht darin, die störenden Oberflächenfehler auf der Oberfläche eines auf einen Endlosfasertextil basierenden Faserverbundwerkstoff zu reduzieren und gleichzeitig Fehlstellen im dabei zu verwendenden Organoblech durch Aufbringen einer Narbung zu kaschieren, um ein lederähnliches, haptisches Erscheinungsbild des Faserverbundwerkstoffs zu erzeugen.

Lösung der Aufgabe und Gegenstand der vorliegenden Erfindung ist ein Kunststoffformteil, auch als Faserverbundwerkstoff bezeichnet, mit einem Kern aus wenigstens einer Lage eines Endlosfasertextils, das mit einer Matrix wenigstens eines thermoplastischen Kunststoffs umgeben ist, auch als Organoblech bezeichnet, und wenigstens einer Deckschicht aus
a) einer auf wenigstens einer Seite des Kerns aufliegenden Wirrglasfaserschicht sowie
b) einer auf der Wirrglasfaserschicht aufliegenden Thermoplastfolie wobei die Schmelzviskosität der Thermoplastfolie höher ist, als die Schmelzviskosität des thermoplastischen Kunststoffs in der Matrix des Kerns.

Endlosfasertextil bedeutet im Sinne der vorliegenden Erfindung gerichtete oder verwebte Endlosfasern, die bevorzugt in Form von Geweben oder Gelegen vorliegen. Ein Organoblech im Sinne der vorliegenden Erfindung ist ein Kern aus wenigstens einer Lage eines Endlosfasertextils, der mit einer Matrix wenigstens eines thermoplastischen Kunststoffs umgeben ist.

Der neue Verbundwerkstoff zeichnet sich dadurch aus, dass weder die Gewebewelligkeit und die Gewebestruktur des im Faserverbundwerkstoff integrierten Organoblechs, noch die Welligkeit der Wirrglasfasermatte und Faserstruktur der einzusetzenden Wirrglasfaserschicht äußerlich am Faserverbundwerstoff zu erkennen ist, sondern die Oberfläche des Faserverbundwerkstoffs die Struktur der Matrize aus dem Formgebungsprozess annimmt und somit visuell als auch haptisch einen hochwertigen Eindruck vermittelt.

Die Matrize und/oder Patrize des Umform- oder Spritzgießwerkzeugs ist dabei mit einer strukturierten Werkzeugwand ausgerüstet, die z.B. eine lederähnliche Narbung (Textur) oder eine andere Ätz- bzw. laserstrukturierte Oberflächenstruktur aufweist. Der Zuschnitt muss hierbei so orientiert sein, dass die mit Wirrglasfasermatte und Folie modifizierte Seite in Richtung der strukturierten Oberfläche der Matrize bzw. Patrize zeigt. Beim Schließen des Werkzeuges kann nun die Strukturierung auf die durch Wirrglasfaserschicht und Thermoplastfolie modifizierte Oberfläche des Organoblechs abgeformt werden.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind. Unter der Schmelzviskosität wird erfindungsgemäß die Viskosität in der schmelzflüssigen Phase am Schmelzpunkt des / der im Rahmen der vorliegenden Erfindung einzusetzenden Kunststoffe(s), bevorzugt Thermoplasten, verstanden. Im erweiterten Sinne versteht man insbesondere bei makromolekularen Stoffen, die meist keinen festen Schmelzpunkt besitzen, auch Viskositätsfunktionen, die an der Schmelze bei anderen Temperaturen als der Schmelztemperatur gemessen wurden. Diese Bedeutung ist insbesondere für Polymere wichtig, da diese im Gegensatz zu niedermolekularen Stoffen meist nicht über einen festen Schmelzpunkt, sondern über einen weiten Schmelz- bzw. Erweichungsbereich verfügen. Die Schmelzviskosität ist nicht nur vom Molekülaufbau (Molmasse, Verzweigungsgrad, Wechselwirkungen), sondern in erheblichem Maße auch von der Temperatur und den Scherbedingungen (z.B. Schergefälle oder Düsengeometrie) abhängig. Demzufolge wird die Schmelzviskosität eines Stoffes meist für jeweils verschiedene Temperaturen in Abhängigkeit von der Schergeschwindigkeit (oder vergleichbaren Größen) gemessen und die Abhängigkeiten dann graphisch dargestellt. Die Viskosität von Schmelzen homologer Reihen makromolekularer Substanzen nimmt mit konstanter Temperatur mit steigendem Gewichtsmittel des Molekulargewichtes zu. Die Schmelzviskosität wird meist in heizbaren Rotations-Viskosimetern vom Platte-Kegel- oder Platte-Platte-Typ oder in speziellen Kapillar-Viskosimetern ermittelt, wobei auf Temperaturkonstanz während der Messung zu achten ist. Die Schmelzviskosität hat insbesondere für die Auslegung und die Fahrweise von Kunststoffverarbeitungsanlagen eine große praktische Bedeutung. Wichtig ist die Kenntnis der Schmelzviskositäten bei allen formgebenden Verfahren, die Schmelzen nutzen, insbesondere Schmelzspinnen, Extrudieren, Spritzgießen und Thermoformen. Erfindungsgemäß bevorzugt weist der Thermoplast in der Thermoplastfolie eine um mindestens 10% höhere Schmelzviskosität als der Thermoplast im Matrixmatrial des Kerns vom Organoblechs auf. Die Schmelzviskosität wird im Rahmen der vorliegenden Erfindung nach ISO 11443 bestimmt.

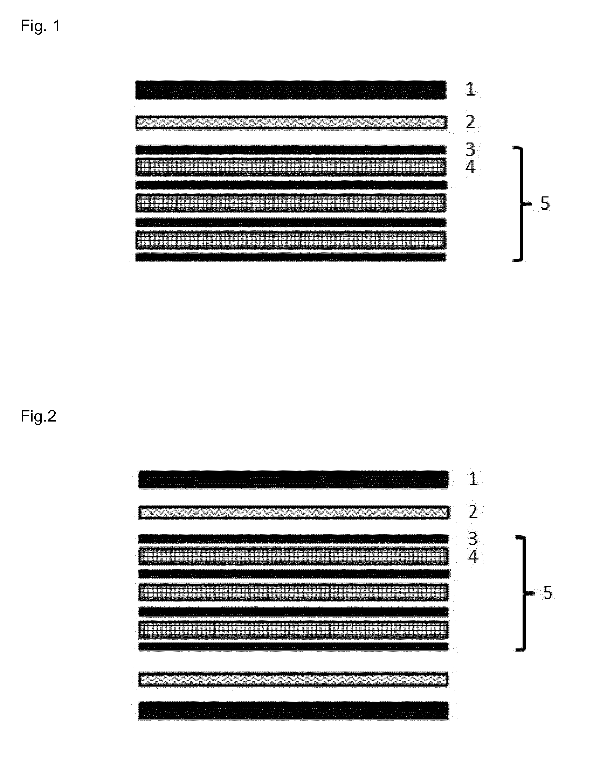

In einer bevorzugten Ausführungsform ist das faserverstärkte Kunststoffformteil / der erfindungsgemäße Faserverbundwerkstoff ein ebenflächiges Erzeugnis oder ein dreidimensionales Erzeugnis, das erst durch ein Umformungsverfahren aus einem ebenen Erzeugnis hergestellt wird. In einer bevorzugten Ausführungsform enthält der Kern des faserverstärkten Kunststoffformteils/Verbundwerkstoffs wenigstens eine Lage eines Endlosfasertextils, jedoch höchstens 24 Lagen. Besonders bevorzugt enthält das als Kern einzusetzende Organoblech wenigstens zwei bis fünf Lagen, ganz besonders bevorzugt enthält das als Kern einzusetzende Organoblech drei Lagen eines Endlosfasertextils (siehe Fig. 1 und Fig. 2).

In einer bevorzugten Ausführungsform enthält die Matrix des als Kern einzusetzenden Organoblechs als thermoplastischen Kunststoff wenigstens einen der Reihe Polyamid 6 (PA6), Polyamid 66 (PA66), Polyprolylen (PP), Polyphenylensulfid (PPS), thermoplastisches Polyurethan (TPU), Polyphthalamid (PPA), Polybutylenterephthalat (PBT), Polyamid 12 (PA12) und Polycarbonat (PC). Bevorzugt werden PA6, PA66 oder PP als Thermoplast für die Matrix eingesetzt, besonders bevorzugt PA6.

Bevorzugt werden teilkristalline Kunststoffe eingesetzt, besonders bevorzugt Polyamide, insbesondere teilkristallines Polyamid 6. Teilkristalline Polyamide besitzen gemäß DE 10 2011 084 519 A1 eine Schmelzenthalpie von mehr als 25 J/g, gemessen mit der DSC-Methode gemäß ISO 11357 beim zweiten Aufheizen und Integration des Schmelzpeaks.

Bevorzugt wird für das als Kern einzusetzende Organoblech ein Thermoplast eingesetzt, der eine Schmelzviskosität im Bereich von 10¹ bis 10⁶ Pa·s hat. Besonders bevorzugt werden für die Matrix des als Kern einzusetzenden Organoblechs Polyamide mit einer relativen Viskosität ηᵣₑₗ, gemessen in 1 gew.-%iger m-Kresollösung bei 25° C im Bereich von 2,3 bis 4,0; besonders bevorzugt im Bereich von 2,7 bis 3,5 eingesetzt.

In einer bevorzugten Ausführungsform werden für das als Kern einzusetzende Organoblech Endlosfasertextilien von Geweben oder Gelegen auf Basis wenigstens eines Rohstoffs der Reihe Glas, Kohlenstoff, Aramid oder Stahl oder deren Mischformen, eingesetzt.

Bevorzugt werden Glasfasern, Kohlenstofffasern, Aramidfasern oder Stahlfasern im Kern des Organoblechs eingesetzt, besonders bevorzugt Glasfasern oder Kohlenstofffasern, ganz besonders bevorzugt Glasfasern.

Bevorzugt werden Lagen von Glasfasergewebe mit einem Gewicht im Bereich von 50 g/m² bis 1200 g/m², besonders bevorzugt im Bereich von 200 g/m² bis 800 g/m², ganz besonders bevorzugt im Bereich von 550 g/cm² bis 650 g/cm² eingesetzt.

Bevorzugt liegt der Fasergehalt im als Kern des erfindungsgemäßen Faserverbundwerkstoffs einzusetzenden Organoblech im Bereich von 40 bis 60 Vol.-%, besonders bevorzugt im Bereich von 45 bis 55 Vol.-%, ganz besonders bevorzugt im Bereich von 45 bis 48 Vol.-%, wobei die Summe aller Inhaltsstoffe des Kerns bzw. des Organoblechs stets 100 Vol.-% ergibt. Als weitere gegebenenfalls im Kern bzw. Organoblech vorliegende Inhaltsstoffe werden üblicherweise die im jeweiligen Kunststoff einzusetzenden Additive eingesetzt, die dem Fachmann bekannt sind.

Als Kern für einen erfindungsgemäßen Verbundwerkstoff einzusetzende Organobleche sind bei der Firma Bond-Laminates GmbH, Brilon unter der Handelswaren TEPEX® erhältlich. Diese Organobleche sind vollständig imprägnierte und konsolidierte Halbzeuge. Faserverstärkte Kunststoffformteile mit Textur wurden im Rahmen der vorliegenden Erfindung mit TEPEX® 102-RG600(3) hergestellt, einem 1,5mm Materialstärke aufweisenden, schwarz eingefärbten Organoblech aus drei Lagen Rovingglas-Gewebe, mit einem Gewicht von 600 g/m² und einem in Bezug auf die Polyamid 6 Matrix Faservolumengehalt von 47%. Ein Herstellungsverfahren für ein als Kern der erfindungsgemäßen Verbundwerkstoffe einzusetzendes Organoblech ist beispielsweise aus EP 1 923 420 A1 bekannt, deren Inhalt hiermit vollumfänglich umfasst wird. Die bei der Herstellung von Organoblechen angewandten Temperaturen orientieren sich an den Erweichungspunkten der einzusetzenden Kunststoffe, bevorzugt Thermoplasten, und liegen bevorzugt im Bereich von 140 bis 380 C. Die bei der Herstellung von Organoblechen anzuwendenden Flächendrücke liegen bevorzugt im Bereich von 0,1 bis 5 MPa. Ein erfindungsgemäß als Kern des erfindungsgemäßen Faserverbundwerkstoffs mit Textur einzusetzendes Organoblech zeichnet sich durch eine wellige Oberfläche aus, wobei die Wellen durch das Verweben von Kettfaden und Schussfaden, der für das Fasergewebe zu verwendenden Fasern im Falle von Glasfasern Höhen von bis zu 15 µm erzielen und umgekehrt die matrixreichen Regionen, wo also Kettfaden und Schussfaden nicht übereinander liegen, Tiefen von ebenfalls bis zu 15 µm erzielen können (siehe Fig. 3). Im Falle der Verwendung anderer Fasern oder Webarten können Organobleche mit welligen Oberflächen von zum Teil noch höheren Werten für die Höhen und Tiefen erhalten werden.

Damit diese herstellungsbedingte Welligkeit der als Kern für einen erfindungsgemäßen Faserverbundwerkstoff einzusetzenden Organobleche nicht den optischen und haptischen Eindruck von daraus herzustellenden Erzeugnissen negativ beeinflusst, werden diese auf der Oberseite und/oder Unterseite erfindungsgemäß mit wenigstens einer Deckschicht aus
a) einer auf wenigstens einer Seite des als Kern dienenden Organoblechs aufliegenden Wirrglasfaserschicht sowie
b) einer auf der Wirrglasfaserschicht aufliegenden Thermoplastfolie aufkaschiert, wobei die Schmelzviskosität der Thermoplastfolie höher ist, als die
Schmelzviskosität des thermoplastischen Kunststoffs in der Matrix des Kerns aus Organoblech.

Die auf dem Organoblech aufliegende Wirrglasfaserschicht ist bevorzugt eine Wirrglasfasermatte mit einem Flächengewicht im Bereich von 10 bis 450 g/m², besonders bevorzugt mit einem Flächengewicht im Bereich von 20 bis 225 g/m², ganz besonders bevorzugt mit einem Flächengewicht im Bereich von 30 bis 100 g/m², insbesondere mit einem Flächengewicht im Bereich von 40 bis 60 g/m².

Erfindungsgemäß einzusetzende Wirrglasfasermatten werden beispielsweise als Vlies unter der Bezeichnung S5030 von JohnsManville, Waterville, Ohio angeboten.

Die auf die Wirrglasfaserschicht aufzulegende oder aufzukaschierende Thermoplastfolie hat vorzugsweise eine Materialdicke im Bereich von 50 bis 200 µm, besonders bevorzugt im Bereich von 50 bis 150 µm.

Die Materialdicken der Thermoplastfolie orientieren sich daran, dass der Thermoplast aus der Thermoplastfolie die Wirrglasfasermatter soweit tränkt, dass sowohl die Faserstruktur der Wirrglasfasermatte als auch die Wellenstruktur des als Kern dienenden Organoblechs nicht mehr zu erkennen ist, sondern sich eine Textur, bevorzugt sich eine lederähnliche Textur, ausbildet und dem resultierenden Erzeugnis visuell und haptisch ein gehobenes Aussehen, bevorzugt ein Leder-ähnliches Aussehen, vermittelt.

In einer bevorzugten Ausführungsform werden eingefärbte thermoplastische Folien und/oder funktionalisierte thermoplastische Folien eingesetzt.

Im Falle des Einsatzes eingefärbter thermoplastischer Folien wird die Farbe im Hinblick auf den späteren Einsatz des erfindungsgemäßen Verbundwerkstoffs ausgewählt. Dem Fachmann sind hierzu einsetzbare Farbmittel aus der Literatur "Albrecht Müller: Einfärben von Kunststoffen. Carl Hanser Verlag, München 2002. ISBN 3-446-21990-0" bekannt. Im bevorzugten Fall werden schwarze thermoplastische Folien eingesetzt oder Leder-ähnliche Farben gewählt, wobei man sich an modischen Farben der Ledereinfärbung orientiert.

Der Einsatz funktionalisierter Folien erfolgt im Hinblick auf den jeweiligen Anwendungsfall. Dem Fachmann sind hierzu einsetzbare Additive und Füllstoffe aus der Literatur " Erwin Baur, Sigrid Brinkmann, Tim Osswald, Ernst Schmachtenberg: Kunststoff-Taschenbuch. Carl Hanser Verlag, München 2007. ISBN 978-3-446-40352-9" bekannt.

Erfindungsgemäß bevorzugt einzusetzende thermoplastische Folien werden aus PA6, PA66, PP, PPS, TPU, PPA, PBT, PA12 oder PC hergestellt, besonders bevorzugt PA6, PA66 oder PP, ganz besonders bevorzugt PA6 oder PA66, insbesondere bevorzugt PA6. Bevorzugt werden teilkristalline Kunststoffe eingesetzt, besonders bevorzugt Polyamide, insbesondere teilkristallines Polyamid 6. Teilkristalline Polyamide besitzen eine Schmelzenthalpie von mehr als 25 J/g, gemessen mit der DSC-Methode gemäß ISO 11357 beim zweiten Aufheizen und Integration des Schmelzpeaks.

Im Rahmen der experimentellen Arbeiten zur vorliegenden Erfindung wurde gefunden, dass vorzugsweise Thermoplastfolien aus demselben Thermoplast eingesetzt werden, aus dem das erfindungsgemäß einzusetzende Organoblech, also der Kern des erfindungsgemäßen Verbundwerkstoffs, hergestellt wurde. Erfindungsgemäß weist der Thermoplast aus dem die Thermoplastfolie aufgebaut ist, eine höhere Schmelzviskosität auf, als der Thermoplast im Matrixmaterial des Kerns des Verbundwerkstoffs bzw. des Organoblechs.

Bevorzugt weist der Thermoplast in der Thermoplastfolie eine um mindestens 10%, jedoch höchstens 50 % höhere Schmelzviskosität als der Thermoplast im Matrixmatrial des Kerns bzw. Organoblechs auf.

Als erfindungsgemäß einzusetzende Thermoplastfolien können insbesondere Folien des Typs "MF-Folie PA6 B33L schwarz" von der mf-folien GmbH, Kempten, Deutschland, eingesetzt werden.

Die vorliegende Erfindung betrifft aber auch ein Verfahren zur Herstellung eines Faserverbundwerkstoffs mit einem Kern aus wenigstens einer Lage eines Endlosfasertextils, das mit einer Matrix wenigstens eines thermoplastischen Kunststoffs umgeben ist und wenigstens einer Deckschicht aus a) einer auf wenigstens einer Seite des Kerns aufliegenden Wirrglasfaserschicht sowie b) einer auf der Wirrglasfaserschicht aufliegenden Thermoplastfolie, wobei die Schmelzviskosität der Thermoplastfolie höher ist, als die Schmelzviskosität des thermoplastischen Kunststoffs in der Matrix des Kerns, dadurch gekennzeichnet, dass man
i) einen mehrschichtigen Aufbau aus wenigstens einem Organoblech, vorzugsweise einem Organoblech mit einer der Dicke im Bereich von 0,25 bis 6,0 mm, besonders bevorzugt einer Dicke im Bereich von 1,0 bis 2,5 mm, wenigstens einer auf dem Organoblech aufliegenden Wirrglasfasermatte und wenigstens einer auf der Wirrglasfasermatte aufliegenden Thermoplastfolie in Form einer endkonturnahen Platine oder eines Zuschnitts vorlegt,
ii) diesen mehrschichtigen Aufbau auf eine Temperatur oberhalb der Schmelztemperatur des Thermoplasten in der Matrix des Organoblechs erwärmt, bevorzugt mit einem Infrarot-Strahler, in einem Umluftofen oder mittels Kontaktheizung,
iii) den mehrschichtigen Aufbau in ein geöffnetes Werkzeug, bevorzugt ein Umformwerkzeug oder Spritzgießwerkzeug, wobei letzteres beim Schließen als Umformwerkzeug dient, positioniert, bevorzugt mittels eines Handlingsystems automatisiert oder per Hand, und
iv) das Werkzeug mit einem Druck im Bereich von 2 bis 100 MPa und bei einer Werkzeugtemperatur im Bereich von 20 bis 300° C schließt, wobei die Temperatur über der Schmelztemperatur des Thermoplasten in der Thermoplastfolie liegt, und ein "Organoblech" ein Kern aus wenigstens einer Lage eines Endlosfasertextils, der mit einer Matrix wenigstens eines thermoplastischen Kunststoffs umgeben ist, bedeutet.

In einer Ausführungsform kann die Temperatur im Verfahrensschritt iv) variiert werden, so dass Verfahrensschritt iv) im genannten Temperaturbereich variotherm ausgeführt wird.

Im Falle der Nutzung eines Spritzgießwerkzeuges kann im Anschluss an den Umformvorgang in einem zusätzlichen Schritt
v) der Faserverbundwerkstoff mit einer Verrippung, einer Umsäumung oder mit Funktionselementen aus vorzugsweise demselben Thermoplasten, wie er für das Organoblech eingesetzt wurde, mittels Spritzguss hinterspritzt werden.

Durch Einsatz desselben Thermoplasten wie im Organoblech wird ein stoffschlüssiger und / oder formschlüssiger Verbund zwischen Organoblech und Spritzgießmasse erzielt.

Die Matrize und/oder Patrize des Umformwerkzeugs oder des Spritzgießwerkzeugs ist erfindungsgemäß bevorzugt mit einer strukturierten Werkzeugwand ausgerüstet, die besonders bevorzugt eine lederähnliche Narbung (Textur) oder eine andere Ätz- bzw. laserstrukturierte Oberflächenstruktur aufweist. Der Zuschnitt muss hierbei so orientiert sein, dass die mit Wirrglasfasermatte und Folie modifizierte Seite in Richtung der strukturierten Oberfläche der Matrize bzw. Patrize zeigt. Beim Schließen des Werkzeuges kann nun die Strukturierung auf die mit Thermoplastfolie und Wirrglasfasermatte modifizierte(n) Oberfläche(n) des Organoblechs abgeformt werden. Bedingung hierfür ist, dass die Temperatur der Thermoplastfolienoberfläche noch über deren Schmelztemperatur liegt, da sonst ein Abformen der durch die Matrize bzw. Patrize vorgegebenen Mikrostrukturen nicht möglich ist.

Die erfindungsgemäßen Faserverbundwerkstoffe zeichnen sich durch eine Oberflächenstruktur bzw. Textur aus, bei der weder eine aus der Wirrglasfasermatte resultierende Faserstruktur noch eine aus dem Organoblech resultierende Oberflächenwelligkeit auf der Oberfläche der erfindungsgemäßen Verbundwerkstoffe zu erkennen ist.

Mit diesem Verfahren können je nach Ausgestaltung der Matrize und/oder Patrize Oberflächen an Faserverbundwerkstoffen aus Organoblechen realisiert werden, die keine Verarbeitung von Organoblech(en) vermuten lassen. So können Sichtbauteile, insbesondere Sichtbauteile im automobilen Innenraum, realisiert werden, die durch die hohe Steifigkeit und Festigkeit der Organobleche wesentlich leichter dargestellt werden können.

Das Herstellungsverfahren für ein als Kern der erfindungsgemäßen Faserverbundwerkstoffe einzusetzendes Organoblech ist beispielsweise aus EP 1 923 420 A1 bekannt. Dieses umfasst das Imprägnieren von Verstärkungsfasern mit einem thermoplastischen Matrixmaterial aus Kunststoff, wodurch die Verstärkungsfasern mit dem Matrixmaterial über eine Faser-Matrix-Haftung gekoppelt werden.

Die vorliegende Erfindung betrifft schließlich die Verwendung der erfindungsgemäßen Faserverbundwerkstoffe zur Gewichtsreduktion von Fortbewegungsmitteln, bevorzugt als Sichtbauteile, besonders bevorzugt als Sichtbauteile in Fortbewegungsmitteln, insbesondere als Sichtbauteile im automobilen Innenraum.

### Beispiele:

Die vorliegende Erfindung sei anhand der Fig.1 bis Fig.3 erläutert:
Fig. 1 zeigt die Kombination eines Organoblechs 5, bestehend aus Matrix 3 und Endlosfasertextil 4, mit einseitig aufliegender Wirrglasfaserschicht 2 und einer darauf aufliegenden Thermoplastfolie 1.
Fig. 2 zeigt die Kombination eines Organoblechs 5, bestehend aus Matrix 3 und Endlosfasertextil 4, mit beidseitig aufliegender Wirrglasfaserschichten 2 und beidseitig auf den Wirrglasfaserschichten aufliegenden Thermoplastfolien 1.
Fig. 3 zeigt den Ausschnitt eines erfindungsgemäß einzusetzenden Organoblechs, worin das Gewebe hergestellt aus einem gebündelten Faserstrang als Schussfaden 2 und Kettfaden 3 zu einer Substratoberfläche mit Einfallstellen 4 führt und es nach Applikation mit dem Matrix-Kunststoff, bevorzugt einem Thermoplasten, zu matrixreichen Regionen 4 und zu faserreichen Regionen 5 kommt, die dem Organoblech eine wellige Oberfläche geben.

## Patentansprüche

1. Faserverbundwerkstoff mit einem Kern aus wenigstens einer Lage eines Endlosfasertextils, das mit einer Matrix wenigstens eines thermoplastischen Kunststoffs umgeben ist, und wenigstens einer Deckschicht aus
a) einer auf wenigstens einer Seite des Kerns aufliegenden Wirrglasfaserschicht sowie
b) einer auf der Wirrglasfaserschicht aufliegenden Thermoplastfolie, wobei die Schmelzviskosität der Thermoplastfolie höher ist, als die Schmelzviskosität des thermoplastischen Kunststoffs in der Matrix des Kerns.

2. Faserverbundwerkstoff gemäß Anspruch 1, **dadurch gekennzeichnet, dass** dieses ein ebenflächiges Erzeugnis oder ein dreidimensionales Erzeugnis ist, das erst durch ein Umformungsverfahren aus einem ebenen Erzeugnis hergestellt wird.

3. Faserverbundwerkstoff gemäß einem der Ansprüche 1 oder 2, **dadurch gekennzeichnet, dass** der Kern des Faserverbundwerkstoffs wenigstens eine Lage eines Endlosfasertextils, jedoch höchstens 24 Lagen enthält.

4. Faserverbundwerkstoff gemäß einem der Ansprüche 1 bis 3, **dadurch gekennzeichnet, dass** die Matrix des Kerns als thermoplastischen Kunststoff wenigstens einen der Reihe Polyamid 6 (PA6), Polyamid 66 (PA66), Polyprolylen (PP), Polyphenylensulfid (PPS), thermoplastisches Polyurethan (TPU), Polyphthalamid (PPA), Polybutylenterephthalat (PBT), Polyamid 12 (PA12) und Polycarbonat (PC) enthält.

5. Faserverbundwerkstoff gemäß Anspruch 4, **dadurch gekennzeichnet, dass** für den Kern ein Thermoplast eingesetzt wird, der eine Schmelzviskosität im Bereich von 10¹ bis 10⁶ Pa·s hat.

6. Faserverbundwerkstoff gemäß einem der Ansprüche 4 oder 5, **dadurch gekennzeichnet, dass** für die Matrix des Kerns Polyamide mit einer relativen Viskosität ηᵣₑₗ, gemessen in 1 gew.-%iger m-Kresollösung bei 25° C im Bereich von 2,3 bis 4,0 eingesetzt werden.

7. Faserverbundwerkstoff gemäß einem der Ansprüche 1 bis 6, **dadurch gekennzeichnet, dass** für den Kern Endlosfasertextillagen in Form von Geweben oder Gelegen auf Basis wenigstens eines Rohstoffs der Reihe Glas, Kohlenstoff, Aramid oder Stahl oder deren Mischformen eingesetzt werden.

8. Faserverbundwerkstoff gemäß Anspruch 7, **dadurch gekennzeichnet, dass** im Kern Glasfasern, Kohlenstofffasern, Aramidfasern oder Stahlfasern eingesetzt werden, bevorzugt Glasfasern oder Kohlenstoff fasern, besonders bevorzugt Glasfasern.

9. Faserverbundwerkstoff gemäß Anspruch 8, **dadurch gekennzeichnet, dass** Lagen von Glasfasergewebe mit einem Gewicht im Bereich von 50 g/m² bis 1200 g/m², eingesetzt werden.

10. Faserverbundwerkstoff gemäß einem der Ansprüche 1 bis 9, **dadurch gekennzeichnet, dass** der Fasergehalt im Kern im Bereich von 40 bis 60 Vol.-% liegt, wobei die Summe aller Inhaltsstoffe eines Kerns stets 100 Vol.-% ergibt und als weitere im Kern vorliegende Inhaltsstoffe üblicherweise die im jeweiligen Kunststoff einzusetzenden Additive eingesetzt werden.

11. Faserverbundwerkstoff gemäß einem der Ansprüche 1 bis 10, **dadurch gekennzeichnet, dass** die auf dem Kern aufliegende Wirrglasfaserschicht eine Wirrglasfasermatte mit einem Flächengewicht im Bereich von 10 bis 450 g/m² ist.

12. Faserverbundwerkstoff gemäß einem der Ansprüche 1 bis 11, **dadurch gekennzeichnet, dass** die auf die Wirrglasfaserschicht aufzulegende Thermoplastfolie eine Materialdicke im Bereich von 50 bis 200 µm aufweist.

13. Faserverbundwerkstoff gemäß Anspruch 12, **dadurch gekennzeichnet, dass** die Thermoplastfolie eingefärbt und/oder funktionalisiert ist.

14. Faserverbundwerkstoff gemäß der Ansprüche 12 oder 13, **dadurch gekennzeichnet, dass** die Thermoplastfolie aus PA6, PA66, PP, PPS, TPU, PPA, PBT, PA12 oder PC hergestellt werden.

15. Faserverbundwerkstoff gemäß einem der Ansprüche 1 bis 14, **dadurch gekennzeichnet, dass** der Thermoplast in der Thermoplastfolie eine um mindestens 10%, jedoch höchstens 50 % höhere Schmelzviskosität als der Thermoplast im Matrixmatrial des Kerns aufweist.

16. Verfahren zur Herstellung eines Faserverbundwerkstoffs mit einem Kern aus wenigstens einer Lage eines Endlosfasertextils, das mit einer Matrix wenigstens eines thermoplastischen Kunststoffs umgeben ist und wenigstens einer Deckschicht aus a) einer auf wenigstens einer Seite des Kerns aufliegenden Wirrglasfaserschicht sowie b) einer auf der Wirrglasfaserschicht aufliegenden Thermoplastfolie wobei die Schmelzviskosität der Thermoplastfolie höher ist, als die Schmelzviskosität des thermoplastischen Kunststoffs in der Matrix des Kerns, **dadurch gekennzeichnet, dass** man
i) einen mehrschichtigen Aufbau aus wenigstens einem Organoblech, vorzugsweise einem Organoblech mit einer der Dicke im Bereich von 0,25 bis 6,0 mm, besonders bevorzugt einer Dicke im Bereich von 1,0 bis 2,5 mm, wenigstens einer auf dem Organoblech aufliegenden Wirrglasfasermatte und wenigstens einer auf der Wirrglasfasermatte aufliegenden Thermoplastfolie in Form einer endkonturnahen Platine oder eines Zuschnitts vorlegt,
ii) diesen mehrschichtigen Aufbau auf eine Temperatur oberhalb der Schmelztemperatur des Thermoplasten für die Matrix des Organoblechs erwärmt, bevorzugt mit einem Infrarot-Strahler, in einem Umluftofen oder mittels Kontaktheizung,
iii) den mehrschichtigen Aufbau in ein geöffnetes Werkzeug, bevorzugt ein Umformwerkzeug oder Spritzgießwerkzeug, wobei letzteres beim Schließen als Umformwerkzeug dient, positioniert, bevorzugt mittels eines Handlingsystems automatisiert oder per Hand, und
iv) das Werkzeug mit einem Druck im Bereich von 2 bis 100 MPa und bei einer Werkzeugtemperatur im Bereich von 20 bis 300° C schließt, wobei die Temperatur über der Schmelztemperatur des Thermoplasten in der Thermoplastfolie liegt, und ein "Organoblech" ein Kern aus wenigstens einer Lage eines Endlosfasertextils, der mit einer Matrix wenigstens eines thermoplastischen Kunststoffs umgeben ist, bedeutet.

17. Verfahren gemäß Anspruch 16, **dadurch gekennzeichnet, dass** man im Anschluss an den Umformvorgang und im Falle der Nutzung eines Spritzgießwerkzeugs v) den Faserverbundwerkstoff mit einer Verrippung, einer Umsäumung oder mit Funktionselementen mittels Spritzguss hinterspritzt.

18. Verwendung der Faserverbundwerkstoffe gemäß einem der Ansprüche 1 bis 15 zur Gewichtsreduktion von Fortbewegungsmitteln, bevorzugt als Sichtbauteile, besonders bevorzugt als Sichtbauteile in Fortbewegungsmitteln, insbesondere als Sichtbauteile im automobilen Innenraum.
